# EUROPÄISCHE PATENTSCHRIFT

(11) **EP 4 283 329 B1**
(45) Veröffentlichungstag und Bekanntmachung des Hinweises auf die Patenterteilung: **03.07.2024**
(21) Anmeldenummer: 22175219.9
(22) Anmeldetag: 24.05.2022
(51) Int. Cl.: G01S 7/48, G01S 7/481, G01S 17/42, G01S 17/86, G02B 27/10, G02B 27/14, G01S 17/46

(54) **VORRICHTUNG UND VERFAHREN ZUR GEMEINSAMEN ERFASSUNG EINER FARBE UND EINES ABSTANDS EINES GEGENSTANDS**
DEVICE AND METHOD FOR JOINTLY DETECTING A COLOUR AND A DISTANCE OF AN OBJECT
DISPOSITIF ET PROCÉDÉ DE DÉTECTION COMMUNE D'UNE COULEUR ET D'UNE DISTANCE D'UN OBJET

(43) Veröffentlichungstag der Anmeldung: 29.11.2023
(73) Patentinhaber: SICK AG, 79183 Waldkirch (DE)
(72) Erfinder: Albrecht, Roland, 79312 Emmendingen (DE); Eble, Johannes, 79183 Waldkirch (DE); Fischer, Wendelin, 79106 Freiburg (DE); Hirt, Günter, 77790 Steinach (DE); Kriener, Eva-Maria, 79117 Freiburg (DE); Meyer, Ralf, 79369 Wyhl am Kaiserstuhl (DE); Opfolter, Matthias, 79211 Denzlingen (DE); Reichenbach, Hans-Peter, 79286 Glottertal (DE)
(74) Vertreter: Manitz Finsterwald Patent- und Rechtsanwaltspartnerschaft mbB

(56) Entgegenhaltungen:
- EP-A2- 2 451 150
- EP-B1- 3 770 567
- US-A1- 2010 118 276
- US-A1- 2015 043 009

## Beschreibung

Die Erfindung betrifft eine Vorrichtung und ein Verfahren zur gemeinsamen Erfassung einer Farbe und eines Abstands eines Gegenstands.

Vorrichtungen und Verfahren, die ausgebildet sind, eine Farbe oder einen Abstand eines Gegenstand zu erkennen sind prinzipiell bekannt. Insbesondere beim Ermitteln einer Farbe ist es wünschenswert, auch den Abstand des Gegenstands zu kennen, da sich die ermittelten Farbwerte in Abhängigkeit vom Abstand des Gegenstands verändern und somit auch die Farbauflösung.

Aus der Druckschrift US 2015 / 0 043 009 A1 ist beispielsweise ein Laserscanner mit einer Vielfarb-Lichtquelle und einem Echtzeit-Empfänger bekannt. Die Druckschrift US 2010 / 0 118 276 A1 offenbart ein Vielfarb-Beleuchtungssystem mit einem Strahlkombinierer. In der Druckschrift EP 2 451 150 A2 ist ein Farbsensor beschrieben, der unempfindlich gegenüber Abstandsänderungen ist.

Es ist daher eine Aufgabe, eine verbesserte Vorrichtung und ein verbessertes Verfahren zur gemeinsamen Erfassung einer Farbe und eines Abstands eines Gegenstands anzugeben.

Diese Aufgabe wird gelöst durch die Gegenstände der unabhängigen Ansprüche.

Gemäß einem ersten Aspekt wird Vorrichtung angegeben, umfassend eine Sendeeinheit, eine Empfangseinheit und eine Auswerteeinheit. Die Sendeeinheit umfasst dabei ein Lichtelement, das ausgebildet ist, Licht in einem vordefinierten Wellenlängenbereich zu emittieren und eine Sendeoptik, die ausgebildet ist, das emittierte Licht auf einen Gegenstand zu richten. Die Empfangseinheit umfasst ein erstes Empfangselement, ein zweites Empfangselement, das von dem ersten Empfangselement beabstandet angeordnet ist, und eine Empfangsoptik, die ausgebildet ist, von dem Gegenstand remittiertes Licht zu empfangen und auf das erste Empfangselement und das zweite Empfangselement zu richten. Die Auswerteeinheit ist ausgebildet, von dem ersten Empfangselement empfangenes Licht auszuwerten und einen Abstand des Gegenstands zu ermitteln und von dem zweiten Empfangselement empfangenes Licht auszuwerten und eine Farbe des Gegenstands zu ermitteln.

Das Lichtelement ist dabei ausgebildet, Licht in einem vordefinierten Wellenlängenbereich zu emittieren, insbesondere im Bereich des sichtbaren Lichts. Dabei ist das Lichtelement insbesondere ausgebildet, chromatisch breitbandiges, sogenanntes weißes Licht zu emittieren.

Die Sendeoptik richtet das emittierte Licht auf einen Gegenstand, dessen Farbe erkannt werden soll. Hierzu können eine oder mehrere Linsen und/oder einen oder mehrere Spiegel verwendet werden.

Das Licht wird von dem Gegenstand remittiert und mithilfe der Empfangsoptik, die ebenfalls einen oder mehrere Linsen und/oder einen oder mehrere Spiegel aufweisen kann, auf ein erstes und ein zweites Empfangselement gerichtet. Das erste Empfangselement ist dabei ausgebildet, Abstandsinformationen zurückzuliefern und beispielsweise als Zeilensensor ausgebildet. Alternativ kann das erste Empfangselement auch als Time-of-Flight-Sensor ausgebildet sein. Das zweite Empfangselement ist ausgebildet, Farbinformationen zurückzuliefern und beispielsweise als Farbsensor ausgebildet. Insbesondere ist das zweite Empfangselement ausgebildet, in dem von dem Gegenstand remittierten Licht unterschiedliche Farbanteile zu detektieren, beispielsweise durch einen sogenannten CCD-Sensor.

Die Auswerteeinheit wertet dann die von dem ersten und zweiten Empfangselement empfangenen Informationen aus und bestimmt so einen Abstand und eine Farbe.

In einer nicht beanspruchten, alternativen Ausführungsform wird ein einziges Lichtelement verwendet, um Licht zu emittieren, das sowohl für die Abstandserfassung als auch für die Farberfassung verwendet wird. Hierdurch ergibt sich ein besonders kompakter und günstiger Aufbau der Vorrichtung.

Erfindungsgemäß ist hingegen vorgesehen, dass das Lichtelement eine erste Lichtquelle, eine zweite Lichtquelle und eine dritte Lichtquelle aufweist, die voneinander beabstandet sind und die ausgebildet sind, Licht in drei verschiedenen vordefinierten Wellenbereichen zu emittieren, wobei die Sendeeinheit weiter eine Überlagerungsoptik aufweist, die ausgebildet ist, das von den drei Lichtquellen emittierte Licht zu überlagern und auf eine gemeinsame Strahlachse zu richten.

Die erste, zwei und dritte Lichtquelle sind dabei insbesondere als Halbleiterlichtquellen, insbesondere Leuchtdioden ausgebildet. Dabei liegen der erste, zweite und dritte Wellenlängenbereich insbesondere im Spektrum des sichtbaren Lichts. Insbesondere liegen die drei Wellenlängenbereiche im Bereich rot, grün und blau. Die drei Wellenlängenbereiche unterscheiden sich dabei, können sich aber teilweise überlappen. Dies ist insbesondere eine alternative Ausführungsform zu der weiter oben beschriebenen Ausführungsform, in der das Lichtelement eine einzelne Lichtquelle umfasst, die ausgebildet ist, chromatisch breitbandiges, sogenanntes weißes Licht zu emittieren.

Erfindungsgemäß sind die erste, zweite und dritte Lichtquelle ausgebildet, nacheinander aktiviert zu werden, sodass sich ein bestimmtes Emissionsmuster aus den drei Wellenlängenbereichen ergibt. Dabei ist das zweite Empfangselement derart ausgebildet, dass es, insbesondere nur, die Intensität des remittierten Lichts ermittelt und die Auswerteeinheit auf Basis dieser Intensität unter Berücksichtigung des Emissionsmusters die Farbe des Gegenstands ermittelt.

Durch diese Lösung wird eine besonders gute Farberkennung ermöglicht.

Eine Ausführungsform der Vorrichtung sieht vor, dass die Überlagerungsoptik einen Reflektor umfasst, der eine Vielzahl von reflektierenden Flächen aufweist, die angeordnet und ausgebildet sind, das von den drei Lichtquellen emittierte Licht zu überlagern und auf eine gemeinsame Strahlachse zu richten.

Diese Ausführungsform der Überlagerungsoptik ist beispielsweise in der EP 3 770 567 B1 beschrieben.

Eine alternative Ausführungsform der Vorrichtung sieht vor, dass die Überlagerungsoptik zwei dichroitische Spiegel aufweist, die angeordnet und ausgebildet sind, das von den drei Lichtquellen emittierte Licht zu überlagern und auf eine gemeinsame Strahlachse zu richten.

Diese Ausführungsform der Überlagerungsoptik kann auch als Strahlteilertreppe bezeichnet werden.

Eine weitere alternative Ausführungsform der Vorrichtung sieht vor, dass die Überlagerungsoptik ein erstes Prisma, ein zweites Prisma, ein drittes Prisma und ein viertes Prisma umfasst, die derart aneinander angeordnet sind, dass sie gemeinsam eine Quaderform aufweisen, wobei Kontaktflächen zwischen den Prismen dichroitisch beschichtet sind.

Insbesondere sieht diese Ausführungsform vor, dass das erste, zweite, dritte und vierte Prisma miteinander verkittet und/oder verklebt sind, insbesondere an jeweiligen Flächen, die sich von einer der Katheten des einem Prisma zugrundeliegenden Dreiecks erstrecken.

Durch diese drei alternativen Ausführungsformen wird eine besonders gute Überlagerung des von den drei Lichtquellen emittierten Lichts ermöglicht.

Eine nicht beanspruchte Ausführungsform der Vorrichtung sieht vor, dass sie weiter ein abschnittsweise flexibles Basiselement umfasst, an dem die erste Lichtquelle, die zweite Lichtquelle und die dritte Lichtquelle angeordnet sind, wobei das Basiselement derart um die Überlagerungsoptik herum angeordnet ist, dass je eine Lichtquelle an einer von drei benachbarten Seitenflächen der Überlagerungsoptik angeordnet ist.

Durch diese nicht beanspruchte Ausführungsform ist eine besonders einfache Montage der ersten, zweiten und dritten Lichtquelle möglich.

Eine nicht beanspruchte Ausführungsform der Vorrichtung sieht vor, dass das Basiselement ein erstes Positionierungselement, ein zweites Positionierungselement und ein drittes Positionierungselement aufweist, die die erste Lichtquelle, die zweite Lichtquelle und die dritte Lichtquelle in einem vordefinierten Abstand zu den drei benachbarten Seitenflächen der Überlagerungsoptik befestigen. Insbesondere befestigt das erste, zweite und dritte Positionierungselement die erste, zweite und dritte Lichtquelle jeweils in einer Breite, einer Länge und einer Höhe, d.h. in x, y und z im Raum, gegenüber den drei benachbarten Seitenflächen der Überlagerungsoptik.

Optional weisen die erste Lichtquelle, die zweite Lichtquelle und die dritte Lichtquelle eine Blende auf, wobei der vordefinierte Abstand insbesondere ein direkter Kontakt, weiter insbesondere ein spaltfreier Kontakt der jeweiligen Blende mit der jeweiligen Seitenfläche der Überlagerungsoptik ist. Alternativ oder zusätzlich kann eine jeweilige Blende zwischen dem Positionierungselement und der jeweiligen Seitenfläche vorgesehen sein.

Durch diese nicht beanspruchte Ausführungsform wird eine besonders genaue Positionierung der Lichtquellen zu der Überlagerungsoptik gewährleistet.

Eine nicht beanspruchte Ausführungsform der Vorrichtung sieht vor, dass das Basiselement weiter ein viertes Positionierungselement aufweist, und wobei das erste Positionierungselement, das zweite Positionierungselement, das dritte Positionierungselement und das vierte Positionierungselement die Überlagerungsoptik an vier benachbarten Seitenflächen befestigen.

Durch diese nicht beanspruchte Ausführungsform wird eine besonders sichere Befestigung der Überlagerungsoptik ermöglicht.

Eine nicht beanspruchte Ausführungsform der Vorrichtung sieht vor, dass das vierte Positionierungselement eine Blende aufweist, die ausgebildet ist, das von der Überlagerungsoptik überlagerte Licht räumlich zu begrenzen.

Durch diese nicht beanspruchte Ausführungsform wird eine Einstellung von Größe und Form des Lichtflecks auf dem Gegenstand ermöglicht.

Eine nicht beanspruchte Ausführungsform der Vorrichtung sieht vor, dass das vierte Positionierungselement die Blende in einem vordefinierten Abstand zu der vierten Seitenfläche befestigt. Insbesondere befestigt das vierte Positionierungselement die Blende in einer Breite, einer Länge und einer Höhe, d.h. in x, y und z im Raum, gegenüber der vierten Seitenflächen der Überlagerungsoptik.

Insbesondere ist der vordefinierte Abstand ein direkter Kontakt, weiter insbesondere ein spaltfreier Kontakt.

Durch diese nicht beanspruchte Ausführungsform wird eine besonders genaue Überlagerung ermöglicht.

Eine nicht beanspruchte Ausführungsform der Vorrichtung sieht vor, dass das erste Positionierungselement, das zweite Positionierungselement und das dritte Positionierungselement jeweils ein oberes und ein unteres Halteelement aufweisen, die ausgebildet sind die Überlagerungsoptik an einer oberen Oberfläche und einer unteren Oberfläche zu befestigen. Mithilfe dieser Halteelemente kann insbesondere die Positionierung der ersten, zweiten und dritten Lichtquelle relativ zur Überlagerungsoptik und/oder zur jeweiligen Blende sichergestellt werden.

Durch diese nicht beanspruchte Ausführungsform wird eine besonders sichere Befestigung der Überlagerungsoptik gewährleistet.

Eine Ausführungsform der Vorrichtung sieht vor, dass die Auswerteeinheit ausgebildet ist, basierend auf dem ermittelten Abstand des Gegenstands die ermittelte Farbe zu korrigieren.

Dazu wird der Abstand zum Gegenstand regelmäßig ermittelt, beispielsweise mit 1 kHz, wodurch eine hochfrequente Kompensation der Farbwerte ermöglicht wird. Die Korrektur der ermittelten Farbe erfolgt insbesondere anhand einer in der Auswerteeinheit hinterlegten Funktion, welche für jede Farbe und passend zu dem zweiten Empfangselement individuell während der Fertigung hinterlegt wird. Die Auswerteeinheit ermittelt beispielsweise anhand der Lichtfleckposition auf dem Zeilensensor den Abstand des Objekts mittels Triangulation und bestimmt daraus Kompensations- bzw. Korrekturfaktoren für die von dem zweiten Empfangselement ermittelte Farbe. Dieser Korrekturfaktor wird entsprechend mit dem Signalen des zweiten Empfangselement multipliziert, um den Objektabstand in der Höhe des Messignals zu kompensieren.

Bei der Erfassung einer Farbe durch das zweite Empfangselement in unterschiedlichen Abständen kann sich das erfasste Messignal um mehrere Größenordnungen ändern. Da die Auflösbarkeit von Farbunterschieden in erster Linie abhängig vom Unterschied des erfassten Messignals ist, ändert sich mit unterschiedlichen Objektabständen auch die Auflösbarkeit von Farbunterschieden. Um die Farbauflösung möglichst über den gesamten Arbeitsbereich optimal zu halten, wird die elektrische Verstärkung des Messsignal des zweiten Empfangselements abhängig von der Höhe des Messignals und damit auch dem Abstand des Objekts dynamisch eingestellt. Entsprechend wird die elektrische Verstärkung bei großen Abständen und geringen Signalhöhe vergrößert, bei kleinen Abständen und intensiven Signalen verkleinert.

Die in der Auswerteeinheit eingestellte und für die Applikation nutzbare Farbauflösung wird entsprechend der eingestellten elektrischen Verstärkung und des ermittelten Abstandskorrekturfaktors angepasst. Sie lässt sich damit in Abhängigkeit der Applikationsbedingungen justieren

Durch diese Ausführungsform wird eine besonders genaue Farbermittlung ermöglicht.

Eine nicht beanspruchte Ausführungsform der Vorrichtung sieht vor, dass die Empfangsoptik einstückig ausgebildet ist. Einstückig meint vorliegend aus einem zusammenhängenden Material und kann auch als integral bezeichnet werden.

Durch diese nicht beanspruchte Ausführungsform wird ein besonders kompakter Aufbau der Vorrichtung ermöglicht.

Gemäß einem weiteren Aspekt wird ein Verfahren zur gemeinsamen Erfassung einer Farbe und eines Abstands eines Gegenstands angegeben.

Dabei umfasst das Verfahren ein Emittieren von Licht mittels einer ersten Lichtquelle, einer zweiten Lichtquelle und einer dritten Lichtquelle in drei vordefinierten Wellenlängenbereichen, wobei die erste, zweite und dritte Lichtquelle nacheinander aktiviert werden, sodass sich ein Emissionsmuster aus den drei Wellenlängenbereichen ergibt, ein Überlagern des von den drei Lichtquellen emittierten Lichts und ein Richten des emittierten Lichts auf eine Strahlachse auf einen Gegenstand mittels einer Überlagerungsoptik, ein Empfangen von von dem Gegenstand remittiertem Licht, ein Richten des remittierten Lichts auf ein erstes Empfangselement und ein zweites Empfangselement, ein Auswerten des von dem ersten Empfangselement empfangenen Lichts um einen Abstand des Gegenstands zu ermitteln und ein Auswerten des von dem zweiten Empfangselement empfangenen Lichts um eine Farbe des Gegenstands zu ermitteln, wobei das Auswerten des von dem zweiten Empfangselement empfangenen Lichts ein Ermitteln der Intensität des remittierten Lichts umfasst und die Farbe auf Basis dieser Intensität unter Berücksichtigung des Emissionsmusters ermittelt wird.

Bezüglich der Ausgestaltungen und Vorteile des Verfahrens zur gemeinsamen Erfassung einer Farbe und eines Abstands eines Gegenstands wird auf die Ausgestaltungen und Vorteile der Vorrichtung zur gemeinsamen Erfassung einer Farbe und eines Abstands eines Gegenstands verwiesen.

Gemäß einem nicht beanspruchten Aspekt ist eine Vorrichtung zur Befestigung einer Überlagerungsoptik vorgesehen. Die Vorrichtung umfasst ein abschnittsweise flexibles Basiselement, und ein erstes, zweites und drittes Positionierungselement, die an dem flexiblen Basiselement angeordnet sind, wobei das abschnittsweise flexible Basiselement derart verbiegbar ist, dass das erste Positionierungselement mit dem zweiten Positionierungselement und das zweite Positionierungselement mit dem dritten Positionierungselement in Eingriff gebracht werden kann und so einen Hohlraum bildet, in dem eine Überlagerungsoptik angeordnet werden kann.

Die Vorrichtung umfasst auch ein viertes Positionierungselement, das mit dem ersten und dem dritten Positionierungselement in Eingriff gebracht werden kann und so die Überlagerungsoptik an der Vorrichtung befestigt.

Bezüglich der Ausgestaltungen und Vorteile der nicht beanspruchten Vorrichtung zur Befestigung einer Überlagerungsoptik wird auf die Ausgestaltungen und Vorteile der Vorrichtung zur gemeinsamen Erfassung einer Farbe und eines Abstands eines Gegenstands verwiesen.

Gemäß einem nicht beanspruchten Aspekt ist ein Verfahren zur Befestigung einer Überlagerungsoptik vorgesehen. Das Verfahren umfasst dabei die Schritte Bereitstellen einer Vorrichtung zur Befestigung einer Überlagerungsoptik, umfassend ein abschnittsweise flexibles Basiselement und ein erstes, zweites und drittes daran angeordnetes Positionierungselement; Verbiegen des abschnittsweise flexiblen Basiselements; in Eingriff Bringen des ersten Positionierungselements mit dem zweiten Positionierungselement; in Eingriff Bringen des zweiten Positionierungselements mit dem dritten Positionierungselement; Anordnen einer Überlagerungsoptik innerhalb eines Hohlraums, der durch den Eingriff des ersten, zweiten und dritten Positionierungselements entstanden ist; in Eingriff bringen eines vierten Positionierungselements mit dem ersten und dem dritten Positionierungselement und somit Befestigen der Überlagerungsoptik.

Bezüglich der Ausgestaltungen und Vorteile des nicht beanspruchten Verfahrens zur Befestigung einer Überlagerungsoptik wird auf die Ausgestaltungen und Vorteile der Vorrichtung zur Befestigung einer Überlagerungsoptik vorgesehen.

Ausführungsformen der Vorrichtung und des Verfahrens zur gemeinsamen Erfassung einer Farbe und eines Abstands eines Gegenstands sowie der nicht beanspruchten Vorrichtung und des nicht beanspruchten Verfahrens zur Befestigung einer Überlagerungsoptik werden nun im Zusammenhang mit den folgenden Figuren näher beschrieben. Es zeigen:
- Fig. 1: eine schematische Draufsicht einer Vorrichtung zur gemeinsamen Erfassung einer Farbe und eines Abstands eines Gegenstands;
- Fig. 2: eine perspektivische Ansicht einer nicht beanspruchten Vorrichtung zur Befestigung einer Überlagerungsoptik;
- Fig. 3: eine perspektivische Ansicht einer nicht beanspruchten Vorrichtung aus Fig. 2;
- Fig. 4: eine Draufsicht der in Fig. 3 gezeigten nicht beanspruchten Vorrichtung im Querschnitt;
- Fig. 5: eine weitere perspektivische Ansicht einer nicht beanspruchten Vorrichtung aus Fig. 2;
- Fig. 6: eine Draufsicht der in Fig. 5 gezeigten nicht beanspruchten Vorrichtung im Querschnitt;
- Fig. 7: eine weitere perspektivische Ansicht einer nicht beanspruchten Vorrichtung aus Fig. 2;
- Fig. 8: eine Draufsicht der in Fig. 7 gezeigten nicht beanspruchten Vorrichtung im Querschnitt;
- Fig. 9: ein Ablaufdiagramm eines Verfahrens zur gemeinsamen Erfassung einer Farbe und eines Abstands eines Gegenstands; und
- Fig. 10: ein Ablaufdiagramm eines nicht beanspruchten Verfahrens zur Befestigung einer Überlagerungsoptik.

Dabei bezeichnen gleiche Bezugszeichen gleiche oder ähnliche Merkmale.

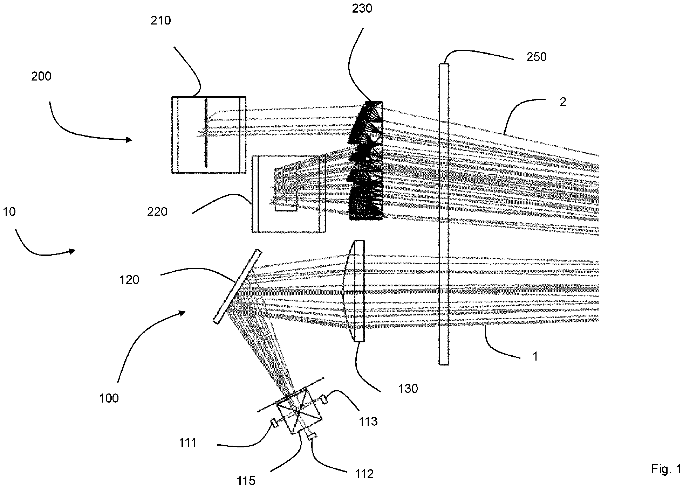

Fig. 1 zeigt eine schematische Draufsicht einer Vorrichtung 10 zur gemeinsamen Erfassung einer Farbe und eines Abstands eines Gegenstands.

Die Vorrichtung 10 weist eine Sendeeinheit 100, eine Empfangseinheit 200 und eine Auswerteeinheit auf, die aus Gründen der Übersichtlichkeit nicht gezeigt ist.

Die Sendeeinheit 100 umfasst ein Lichtelement. Das Lichtelement umfasst dabei eine erste Lichtquelle 111, eine zweite Lichtquelle 112 und eine dritte Lichtquelle 113, die jeweils voneinander beabstandet sind. Die erste Lichtquelle 111 ist dabei ausgebildet Licht in einem ersten vordefinierten Wellenbereich zu emittieren, die zweite Lichtquelle 112 ist ausgebildet Licht in einem zweiten vordefinierten Wellenbereich zu emittieren und die dritte Lichtquelle 112 ist ausgebildet Licht in einem dritten vordefinierten Wellenbereich zu emittieren. Der erste Wellenbereich, der zweite Wellenbereich und der dritte Wellenbereich unterscheiden sich dabei, können sich jedoch teilweise überlappen.

Die Sendeeinheit 100 umfasst auch eine Überlagerungsoptik, die ausgebildet ist, das von den drei Lichtquellen 111, 112, 113 emittierte Licht zu überlagern und auf eine gemeinsame Strahlachse zu richten. Dabei ist die Überlagerungsoptik hier beispielhaft als Strahlüberlagerungswürfel 115 abgebildet. Der Strahlüberlagerungswürfel besteht aus vier aneinander befestigten Prismen, welche auf den Kontaktflächen miteinander dichroitisch beschichtet sind. Der Strahlüberlagerungswürfel weist dabei vier gleich große, rechteckig zueinander angeordnete rechteckige Seitenflächen auf sowie eine rechteckige Dach- und eine Bodenfläche, die ebenfalls rechtwinklig zu den Seitenflächen angeordnet sind und entweder eine gleiche Größe aufweisen wie die Seitenflächen oder eine davon verschiedene Größe. Der Begriff Würfel fasst vorliegend somit auch Quader mit ein.

Die drei Lichtquellen 111, 112, 113 sind dabei derart um die Seiten des Strahlüberlagerungswürfels 115 angeordnet, dass eine Strahlrichtung des durch die erste Lichtquelle 111 emittierten Lichts um 90 Grad in der Zeichnungsebene zu einer Strahlrichtung des durch die zweite Lichtquelle 112 emittierten Lichts versetzt ist und eine Strahlrichtung des durch die zweite Lichtquelle 112 emittierten Lichts um 90 Grad in der Zeichnungsebene zu einer Strahlrichtung des durch die dritte Lichtquelle 113 emittierten Lichts versetzt ist, die erste Lichtquelle 111 und die dritte Lichtquelle 113 sich also um 180 Grad in der Zeichnungsebene gegenüberstehen. Der Strahlüberlagerungswürfel 115 ist dabei derart angeordnet und ausgebildet, die drei Strahlrichtungen der drei Lichtquellen derart zu richten und zu überlagern, dass ein gemeinsamer Lichtstrahl in gegenüber der zweiten Lichtquelle 112, aus dem Strahlüberlagerungswürfel 115 emittiert wird.

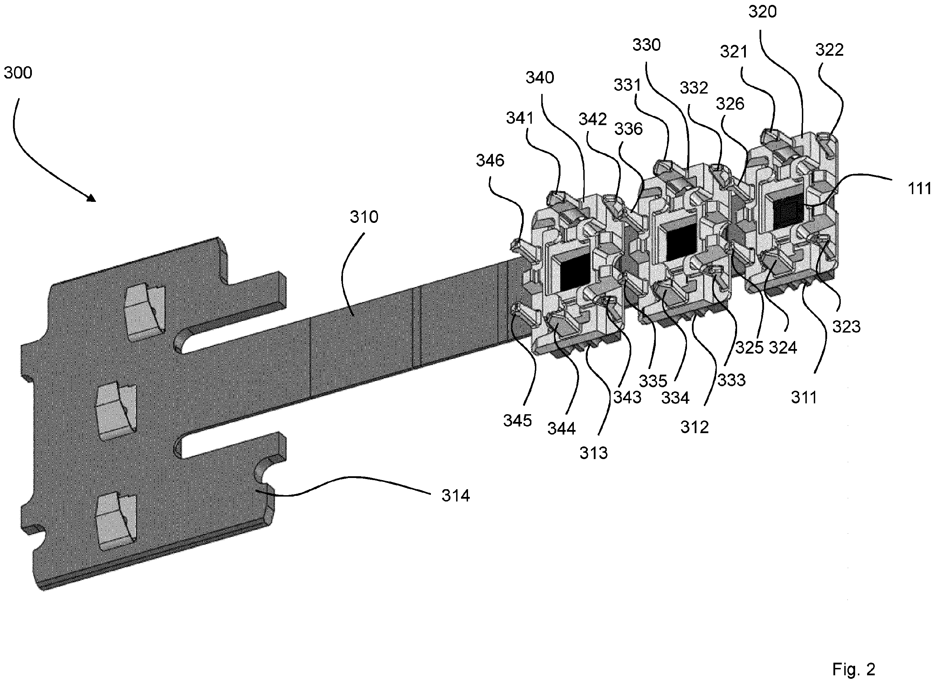

Insbesondere kann die Vorrichtung 10 auch eine nicht beanspruchte Vorrichtung zur Befestigung einer Überlagerungsoptik umfassen, die in der folgenden Fig. 2 noch näher beschrieben wird.

Andere Ausführungsformen einer Überlagerungsoptik, wie beispielsweise einen Reflektor, der eine Vielzahl von reflektierenden Flächen aufweist oder zwei dichroitische Spiegel, die ebenfalls ausgebildet sind, das von den drei Lichtquellen emittierte Licht zu überlagern und auf eine gemeinsame Strahlachse zu richten, die jedoch nicht in den Figuren gezeigt sind, sind ebenso möglich.

Die Sendeeinheit 100 umfasst auch eine Umlenkoptik 120, die ausgebildet ist, das von den drei Lichtquellen 111, 112, 113 emittierte und durch die Überlagerungsoptik überlagerte Licht umzulenken und auf eine Sendeoptik 130 umzulenken. Die Sendeoptik ist dabei ausgebildet, das von den drei Lichtquellen 111, 112, 113 emittierte Licht auf einen Gegenstand zu richten. Der Gegenstand ist aus Gründen den Übersichtlichkeit nicht gezeigt und befindet sich dabei rechts von der Vorrichtung 10, außerhalb der Zeichenfläche.

Die Vorrichtung 10 umfasst auch eine Frontscheibe 250, durch die das von den drei Lichtquellen 111, 112, 113 emittierte Licht aus der Vorrichtung austritt, was durch den Strahlengang 1 gezeigt ist. Das emittierte Licht wird dann an dem Gegenstand remittiert, was durch den Strahlengang 2 gezeigt und tritt als remittiertes Licht durch die Frontscheibe 250 wieder in die Vorrichtung 10 ein.

Dort trifft das remittierte Licht auf eine Empfangsoptik 230 der Empfangseinheit 200, die das remittierte Licht auf ein erstes Empfangselement 210 einerseits und auf ein zweites Empfangselement 220 andererseits, das von dem ersten Empfangselement 210 beabstandet ist, richtet. Das erste Empfangselement 210 und das zweite Empfangselement 220 sind dabei ausgebildet, das auf sie gerichtete Licht zu empfangen und in ein elektrisches Signal umzuwandeln.

Die nicht abgebildete Auswerteeinheit ist dabei ausgebildet ist, das von dem ersten Empfangselement 210 empfangene Licht bzw. das davon gebildete elektrische Signal auszuwerten und einen Abstand des Gegenstands zu ermitteln. Die Auswerteeinheit ist auch ausgebildet, das von dem zweiten Empfangselement 220 empfangene Licht bzw. das davon gebildete elektrische Signal auszuwerten und eine Farbe des Gegenstands zu ermitteln.

Sowohl die Sendeeinheit 100 mit all ihren beschriebenen Komponenten als auch die Empfangseinheit 200 mit all ihren beschriebenen Komponenten sind dabei in einem einzelnen, aus Gründen der Übersichtlichkeit nicht gezeigten Gehäuse untergebracht, das als einzige optische Schnittstelle die Frontscheibe 250 aufweist. Die Auswerteeinheit kann entweder in dem Gehäuse oder außerhalb davon angeordnet sein. Dabei nutzt die Vorrichtung 10 zur gemeinsamen Erfassung einer Farbe und eines Abstands eines Gegenstands ein einzelnes Lichtelement umfassend drei, insbesondere genau drei Lichtquellen, die sowohl zur Bestimmung einer Farbe als auch zur Bestimmung eines Abstands des Gegenstands verwendet werden.

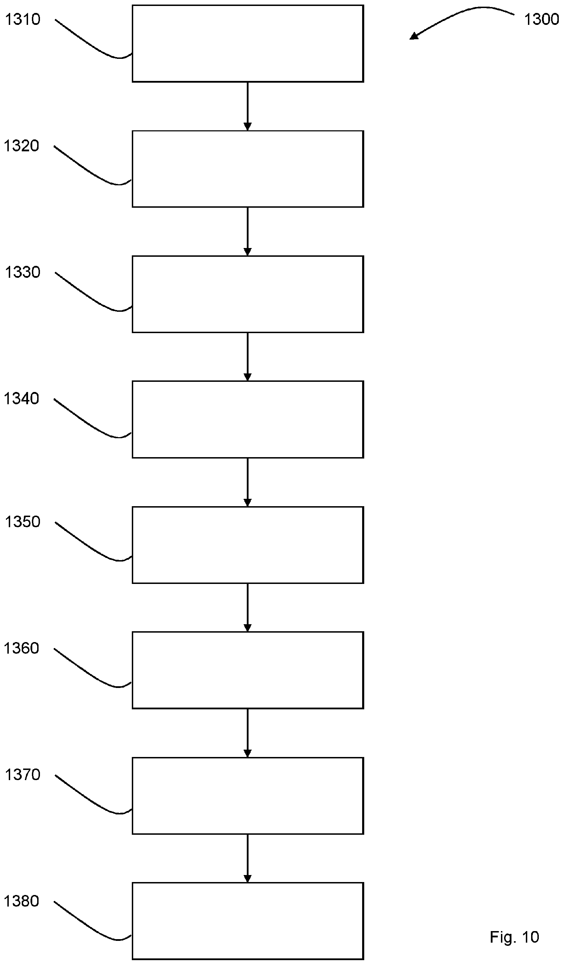

Fig. 2 zeigt eine perspektivische Ansicht einer nicht beanspruchten Vorrichtung 300, die zur Befestigung einer Überlagerungsoptik dient, insbesondere einer Überlagerungsoptik wie in Fig. 1 abgebildet. Dabei befindet sich die Vorrichtung 300 wie in Fig. 2 gezeigt in einem Teilschritt eines Verfahrens zur Befestigung einer Überlagerungsoptik, welches noch im Detail im Zusammenhang mit Fig. 10 beschrieben wird.

Wie in Fig. 2 zunächst gezeigt umfasst die Vorrichtung 300 zur Befestigung einer Überlagerungsoptik ein abschnittsweise flexibles Basiselement 310, umfassend einen ersten starren Abschnitt 311, einen zweiten starren Abschnitt 312, einen dritten starren Abschnitt 313 und einen vierten starren Abschnitt 314.

Am ersten starren Abschnitt 311 ist ein erstes Positionierungselement 320 angeordnet, am zweiten starren Abschnitt 312 ist ein zweites Positionierungselement 330 angeordnet und am dritten starren Abschnitt 313 ist ein drittes Positionierungselement 340 angeordnet.

Das erste Positionierungselement 320, das zweite Positionierungselement 330 und das dritte Positionierungselement 340 sind dabei im wesentlichen gleichförmig ausgebildet, wobei jedes der Positionierungselemente mehrere Halteelemente und mehrere Arretierungselemente aufweist, die im Folgenden beschrieben werden.

Das erste Positionierungselement 320 weist ein oberes Halteelement 321, ein unteres Halteelement 324 sowie vier seitliche Arretierungselemente 322, 323, 325 und 326 auf. Ebenso weist das zweite Positionierungselement 330 weist ein oberes Halteelement 331, ein unteres Halteelement 334 sowie vier seitliche Arretierungselemente 332, 333, 335 und 336 auf. Auch weist das weist dritte Positionierungselement 340 ein oberes Halteelement 341, ein unteres Halteelement 344 sowie vier seitliche Arretierungselemente 342, 343, 345 und 346 auf. Dabei sind jeweils die zwei linken seitlichen Arretierungselemente 322 und 323, 332 und 333 sowie 342 und 343 nach außen versetzt zu den jeweils korrespondierenden zwei rechten seitlichen Arretierungselementen 325 und 326, 335 und 336 sowie 345 und 346 angeordnet.

Dabei sind die die Arretierungselemente derart angeordnet, dass sie mit dazu korrespondierenden Nuten in dem jeweils benachbarten Positionierungselement eingreifen können und so die Positionierungselemente aneinander befestigen können.

Zentral in jedem der drei Positionierungselemente 320, 330, 340 ist eine Lichtquelle angeordnet, wobei nur die erste Lichtquelle 111 in dem ersten Positionierungselement 320 mit einem Bezugszeichen versehen ist. Jede der drei Lichtquellen ist dabei mit einer Blende versehen, die aus Gründen der Übersichtlichkeit ebenfalls nicht gezeigt ist.

Dabei sind das erste Positionierungselement 320, das zweite Positionierungselement 330 und das dritte Positionierungselement 340 im SMD-Prozess auf dem abschnittsweise flexiblen Basiselement 310 befestigt.

Zwischen dem ersten starren Abschnitt 311 und dem zweiten starren Abschnitt 312 ist ein erster flexibler Abschnitt angeordnet und zwischen dem zweiten starren Abschnitt 312 und dem dritten starren Abschnitt 313 ist ein zweiter flexibler Abschnitt angeordnet, wobei die starren Abschnitte 315 und 316 aus Gründen der Übersichtlichkeit nicht mit einem Bezugszeichen versehen sind. Das Basiselement 310 kann auch weitere flexible Abschnitte aufweisen, die hier nicht im Detail mit Bezugszeichen versehen sind.

Der vierte starre Abschnitt 314 weist darüber hinaus Befestigungs- und/oder Anschlusselemente zum Befestigen und/oder Anschließen der Vorrichtung 300 an einem Gehäuse einer Vorrichtung 10 zur gemeinsamen Erfassung einer Farbe und eines Abstands eines Gegenstands, wie in Fig. 1 gezeigt, auf, die hier aus Gründen der Übersichtlichkeit nicht mit Bezugszeichen versehen sind.

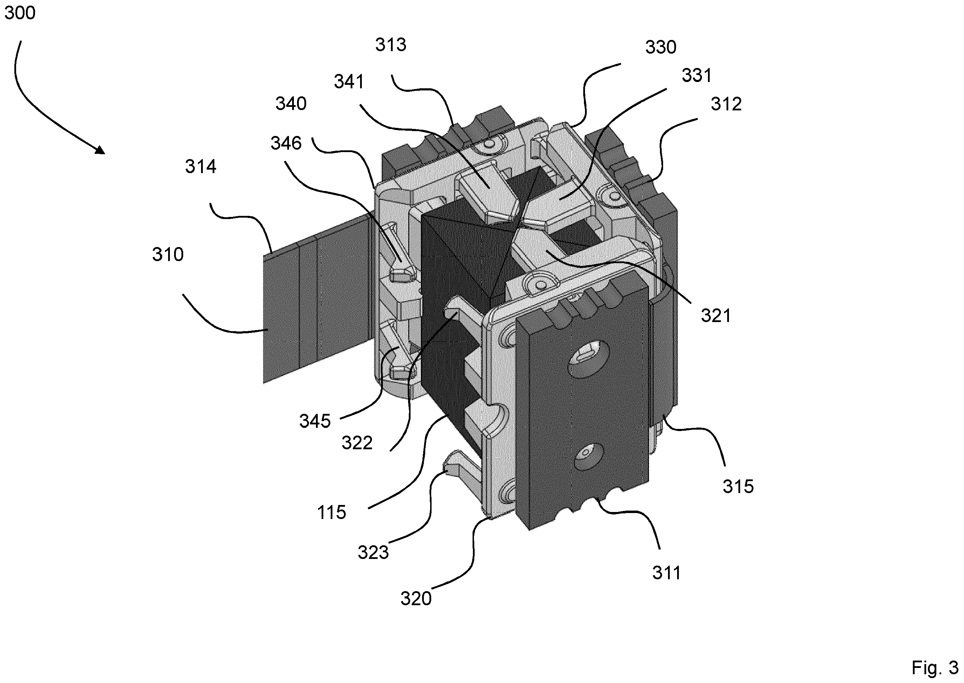

Fig. 3 zeigt eine perspektivische Ansicht einer nicht beanspruchten Vorrichtung 300 zur Befestigung einer Überlagerungsoptik wie in Fig. 2 gezeigt. Dabei befindet sich die Vorrichtung 300 wie in Fig. 3 gezeigt in einem weiteren Teilschritt eines Verfahrens zur Befestigung einer Überlagerungsoptik, welches noch im Detail im Zusammenhang mit Fig. 10 beschrieben wird.

Wie in Fig. 3 ersichtlich wurde eine Überlagerungsoptik in Form eines Strahlüberlagerungswürfels 115, wie bereits in Fig. 1 beschrieben, bereitgestellt. Wie ebenfalls in Fig. 3 ersichtlich weist der Strahlüberlagerungswürfel 115 eine im Wesentlichen quaderförmige Form auf und ist aus vier Prismen zusammengesetzt.

Um den Strahlüberlagerungswürfel 115 herum wurden in diesem in dieser Fig. 3 gezeigten Verfahrensschritt die drei starren Abschnitte 311, 312, 313 mit den daran angeordneten Positionierungselementen 320, 330, 340 mithilfe der flexiblen Abschnitte 315 und 316 derart um den Strahlüberlagerungswürfel 115 angeordnet, dass sie diesen an drei der vier Seitenflächen kontaktieren. Insbesondere krümmen sich die flexiblen Abschnitte 315 und 316 derart, dass sie einen Viertelkreis ausbilden.

Wie in dieser Fig. 3 ebenfalls ersichtlich liegen die oberen Halteelemente 321, 331 und 341 an dem Strahlüberlagerungswürfel 115 an. Ebenso liegen die unteren Halteelemente, die in dieser Fig. 3 aus perspektivischen Gründen nicht sichtbar sind, an dem Strahlüberlagerungswürfel 115 an und fixieren diesen somit an fünf von sechs Flächen.

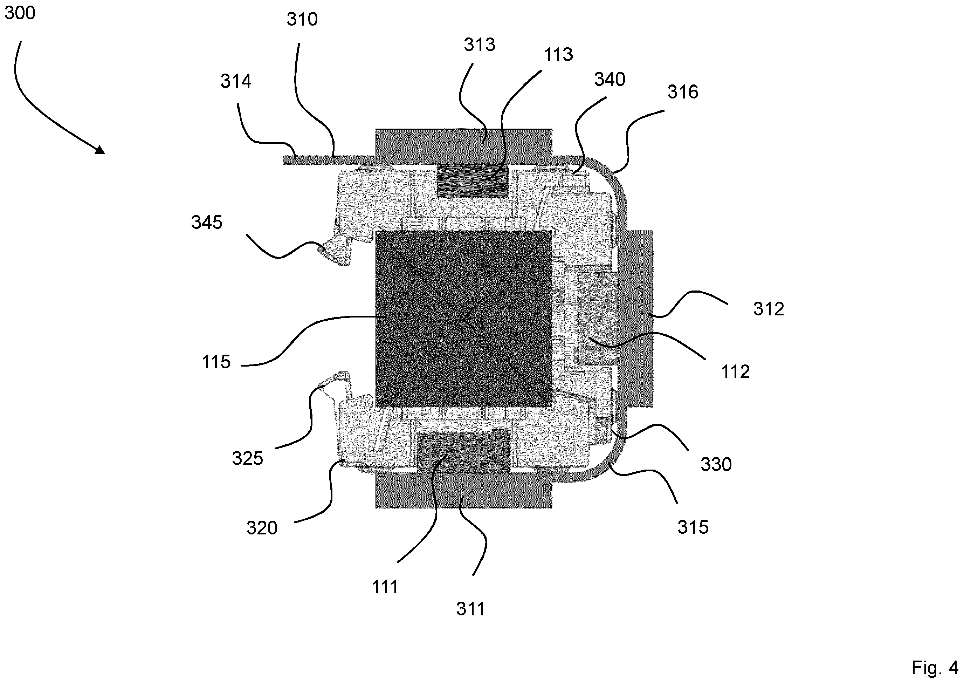

Fig. 4 zeigt eine Draufsicht der in Fig. 3 gezeigten nicht beanspruchten Vorrichtung 300 im Querschnitt. Hier ist insbesondere noch einmal die viertelkreisförmige Form der flexiblen Abschnitte 315 und 316 ersichtlich.

Ebenso ist in Fig. 4 ersichtlich, dass der Strahlüberlagerungswürfel 115 an drei der vier Seitenflächen von den jeweiligen Positionierungselementen kontaktiert und somit in Position gehalten wird.

Auch sind in Fig. 4 die erste Lichtquelle 111, die zweite Lichtquelle 112 und die dritte Lichtquelle 113 ersichtlich, die die drei der vier Seitenflächen mithilfe einer Blende beleuchten können.

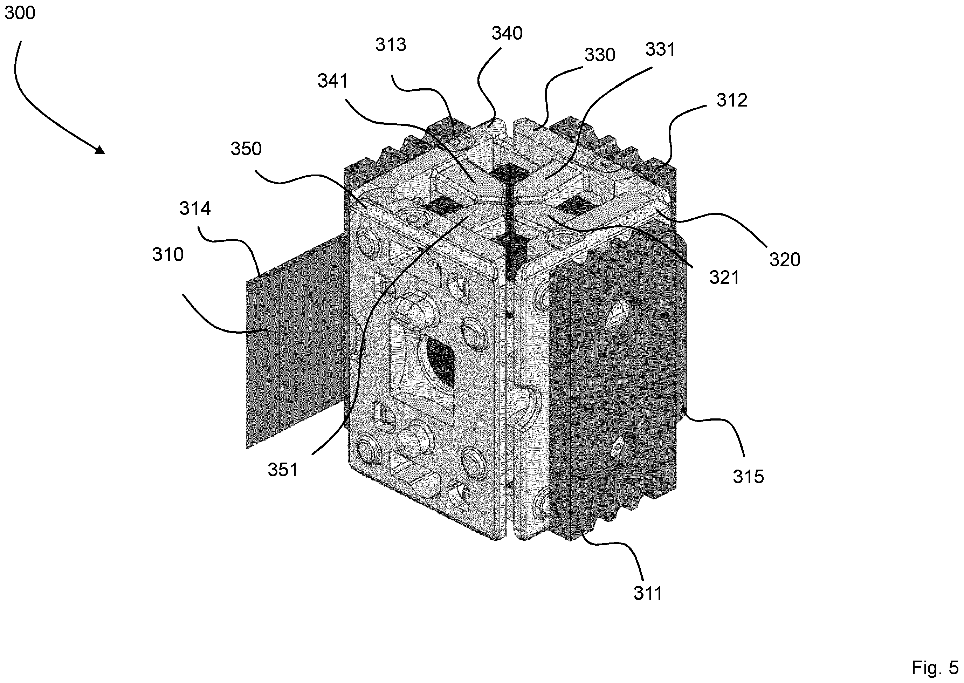

Fig. 5 zeigt eine perspektivische Ansicht einer nicht beanspruchten Vorrichtung 300 zur Befestigung einer Überlagerungsoptik wie in Fig. 2 und Fig. 4 gezeigt. Dabei befindet sich die Vorrichtung 300 wie in Fig. 5 gezeigt in einem weiteren Teilschritt eines Verfahrens zur Befestigung einer Überlagerungsoptik, welches noch im Detail im Zusammenhang mit Fig. 10 beschrieben wird.

Wie in Fig. 5 ersichtlich wurde ein viertes Positionierungselement 350 bereitgestellt, das im Wesentlichen den anderen drei Positionierungselementen gleicht. Abweichend von den anderen drei Positionierungselementen ist jedoch im vierten Positionierungselement 350 keine Lichtquelle vorgesehen, sondern lediglich eine Blende, die eine Form und Größe, beispielsweise einen Durchmesser, des durch den Strahlüberlagerungswürfel 115 emittierten, gemeinsamen Lichtstrahls definiert.

Ebenso ist in Fig. 5 ersichtlich, dass ein oberes Halteelement 351 des vierten Positionierungselements 350 den Strahlüberlagerungswürfel 115 an der Oberseite kontaktiert und so befestigt. Ebenso kontaktiert ein unteres, nicht gezeigtes Halteelement den Strahlüberlagerungswürfel 115 an der Unterseite. Auch greifen weitere vier Arretierungselemente des vierten Positionierungselements 350, die aus perspektivischen Gründen nicht gezeigt sind, mit ebenfalls nicht gezeigten korrespondierenden Nuten in dem benachbarten ersten Positionierungselement 320 und dem ebenfalls benachbarten dritten Positionierungselement 340 ein und befestigen so den Strahlüberlagerungswürfel 115 von allen sechs Seiten.

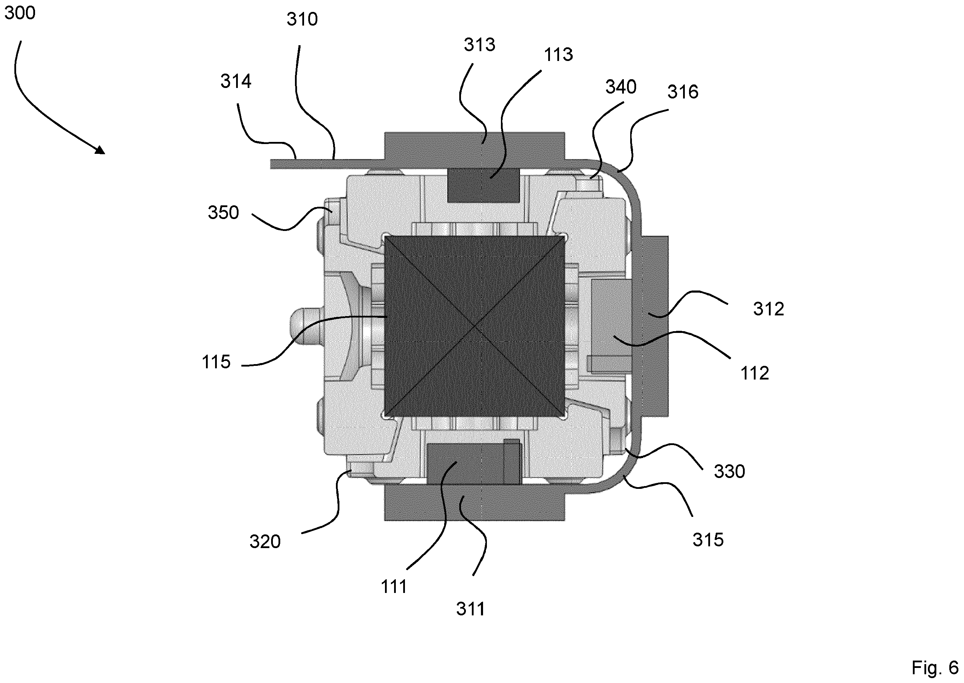

Fig. 6 zeigt eine Draufsicht der in Fig. 5 gezeigten nicht beanspruchten Vorrichtung 300.

In dieser Fig. 6 ist noch einmal ersichtlich, dass das vierte Positionierungselement 350 keine Lichtquelle, sondern lediglich eine Blende aufweist.

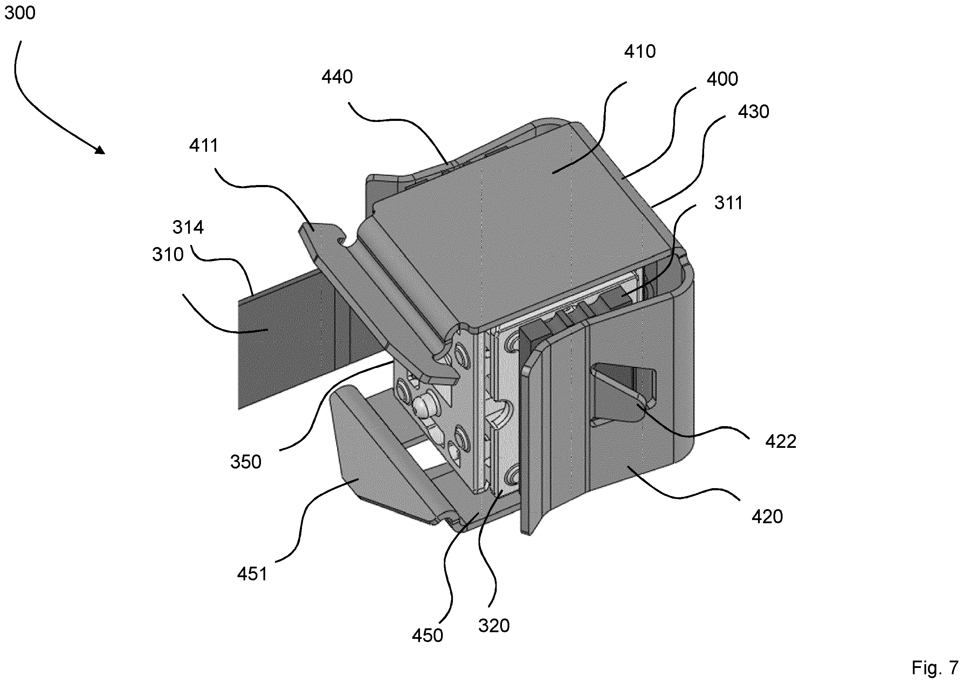

Fig. 7 zeigt eine perspektivische Ansicht einer nicht beanspruchten Vorrichtung 300 zur Befestigung einer Überlagerungsoptik wie in Fig. 2, Fig. 4 und Fig. 6 gezeigt. Dabei befindet sich die Vorrichtung 300 wie in Fig. 7 gezeigt in einem weiteren Teilschritt eines Verfahrens zur Befestigung einer Überlagerungsoptik, welches noch im Detail im Zusammenhang mit Fig. 10 beschrieben wird.

Dabei ist die Vorrichtung 300 in eine Befestigungsmanschette 400 eingeführt. Die Befestigungsmanschette 400 umfasst eine obere Oberfläche 410, eine untere Oberfläche 450 sowie drei Seitenflächen 420, 430 und 440. Eine vierte Seitenfläche ist nicht vorgesehen. So kann die Vorrichtung besonders einfach in die Befestigungsmanschette 400 eingeführt werden.

Die linke und rechte Seitenfläche 420 und 440 umfassen dabei ein Befestigungselement, von denen nur das der linken Seitenfläche mit einem Bezugszeichen 422 versehen ist. Die obere Oberfläche 410 und die untere Oberfläche 450 umfassen jeweils auch Befestigungselemente 411 und 451. Diese Befestigungselemente dienen dazu, die Vorrichtung 300 in einem Gehäuse zu befestigen.

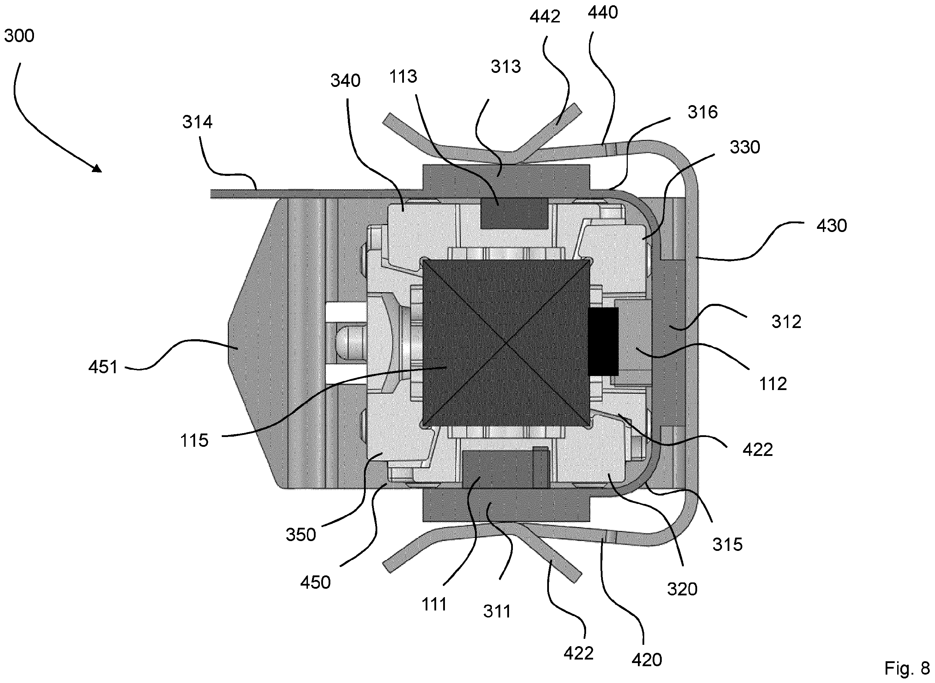

Fig. 8 zeigt eine Draufsicht der in Fig. 7 gezeigten nicht beanspruchten Vorrichtung 300.

Dabei ist insbesondere auch das Befestigungselement 442 der rechten Seitenfläche ersichtlich.

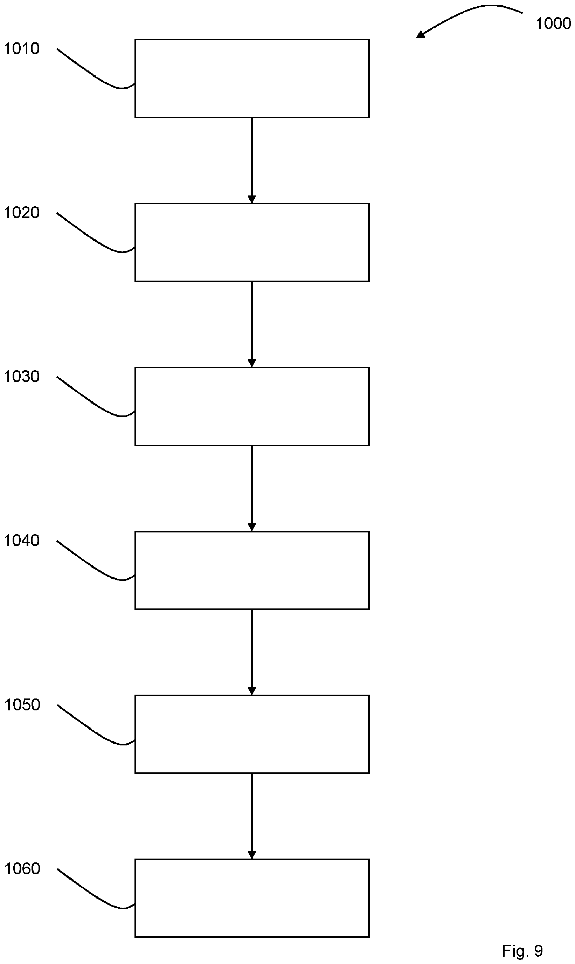

Fig. 9 zeigt ein Ablaufdiagramm eines Verfahrens 1000 zur gemeinsamen Erfassung einer Farbe und eines Abstands eines Gegenstands.

Das Verfahren 1000 umfasst dabei in einem ersten Schritt 1010 ein Emittieren von Licht in einem vordefinierten Wellenlängenbereich. Dieser Schritt kann insbesondere durch das in Fig. 1 gezeigte Lichtelement bzw. die erste, zweite und dritte Lichtquelle 111, 112 und 113 erfolgen.

In einem weiteren Schritt 1020 umfasst das Verfahren 1000 ein Richten des emittierten Lichts auf einen Gegenstand. Dies kann insbesondere mithilfe der in Fig. 1 gezeigten Sendeoptik 130 erfolgen.

In einem weiteren Schritt 1030 umfasst das Verfahren 1000 ein Empfangen von Licht, das von dem Gegenstand remittiert wird.

In einem weiteren Schritt 1040 umfasst das Verfahren 1000 ein Richten des remittierten Lichts auf ein erstes Empfangselement und ein zweites Empfangselement. Dabei kann es sich insbesondere um ein erstes Empfangselement 210 und ein zweites Empfangselement 220, wie in Fig. 1 gezeigt handeln. Dies kann insbesondere mithilfe der in Fig. 1 gezeigten Empfangsoptik 230 erfolgen.

In einem weiteren Schritt 1050 umfasst das Verfahren 1000 ein Auswerten des von dem ersten Empfangselement empfangenen Lichts um einen Abstand des Gegenstands zu ermitteln.

In einem weiteren Schritt 1060 umfasst das Verfahren 1000 ein Auswerten des von dem zweiten Empfangselement empfangenen Lichts um eine Farbe des Gegenstands zu ermitteln.

Die beschriebenen Verfahrensschritte, insbesondere die Schritte 1050 und 1060, können dabei gleichzeitig ausgeführt werden.

In einem weiteren Schritt, der nicht in Fig. 9 gezeigt ist, und der insbesondere vor dem ersten Schritt 1010 erfolgen kann, wird eine Vorrichtung zur gemeinsamen Erfassung einer Farbe und eines Abstands eines Gegenstands, insbesondere wie im Zusammenhang mit den Fig. 1 bis 8 beschrieben, bereitgestellt und/oder mit ihr das Verfahren 1000 durchgeführt.

Fig. 10 zeigt ein Ablaufdiagramm eines nicht beanspruchten Verfahrens 1300 zur Befestigung einer Überlagerungsoptik, insbesondere einer Überlagerungsoptik wie im Zusammenhang mit den Fig. 1 bis 8 beschrieben.

In einem ersten Schritt 1310 wird eine Vorrichtung zur Befestigung einer Überlagerungsoptik bereitgestellt, umfassend ein abschnittsweise flexibles Basiselement und ein erstes, zweites und drittes daran angeordnetes Positionierungselement, insbesondere eine Vorrichtung zur Befestigung einer Überlagerungsoptik wie in Fig. 2 gezeigt.

In einem folgenden Schritt 1320 wird das abschnittsweise flexible Basiselement verbogen und das erste Positionierungselement mit dem zweiten Positionierungselement in Eingriff gebracht sowie das zweite Positionierungselement mit dem dritten Positionierungselement in Eingriff gebracht.

In einem weiteren Schritt 1330 wird eine Überlagerungsoptik bereitgestellt.

In einem weiteren Schritt 1340 wird die Überlagerungsoptik innerhalb eines Hohlraums, der durch den Eingriff des ersten, zweiten und dritten Positionierungselement entstanden ist, angeordnet, insbesondere wie in Fig. 3 und 4 gezeigt.

In einem weiteren Schritt 1350 wird ein viertes Positionierungselement bereitgestellt.

In einem darauffolgenden Schritt 1360 wird das vierte Positionierungselement mit dem ersten und dem dritten Positionierungselement in Eingriff gebracht und so die Überlagerungsoptik befestigt, insbesondere wie in Fig. 5 und 6 gezeigt.

In einem weiteren Schritt 1370 wird eine Befestigungsmanschette bereitgestellt.

In einem darauffolgenden Schritt 1380 wird die Befestigungsmanschette an dem abschnittsweise flexiblen Basiselement befestigt, wie in Fig. 7 und 8 gezeigt.

In einem optionalen, nicht gezeigten Schritt kann die Befestigungsmanschette an einem Gehäuse, insbesondere an einem Gehäuse einer Vorrichtung zur gemeinsamen Erfassung einer Farbe und eines Abstands eines Gegenstands, wie in Fig. 1 gezeigt, befestigt werden.

### Bezugszeichenliste

- 10: Vorrichtung
- 100: Sendeeinheit
- 111: erste Lichtquelle
- 112: zweite Lichtquelle
- 113: dritte Lichtquelle
- 115: Strahlüberlagerungswürfel
- 120: Umlenkoptik
- 130: Sendeoptik
- 200: Empfangseinheit
- 210: erstes Empfangselement
- 220: zweites Empfangselement
- 230: Empfangsoptik
- 250: Frontscheibe
- 300: Vorrichtung
- 310: Basiselement
- 311: erster starrer Abschnitt
- 312: zweiter starrer Abschnitt
- 313: dritter starrer Abschnitt
- 314: vierter starrer Abschnitt
- 315: erster flexibler Abschnitt
- 316: zweiter flexibler Abschnitt
- 320: erstes Positionierungselement
- 321: oberes Halteelement
- 322: Arretierungselement
- 323: Arretierungselement
- 324: unteres Halteelement
- 325: Arretierungselement
- 326: Arretierungselement
- 330: zweites Positionierungselement
- 331: oberes Halteelement
- 332: Arretierungselement
- 333: Arretierungselement
- 334: unteres Halteelement
- 335: Arretierungselement
- 336: Arretierungselement
- 340: drittes Positionierungselement
- 341: oberes Halteelement
- 342: Arretierungselement
- 343: Arretierungselement
- 344: unteres Halteelement
- 345: Arretierungselement
- 346: Arretierungselement
- 350: viertes Positionierungselement
- 351: oberes Halteelement
- 400: Befestigungsmanschette
- 410: obere Oberfläche
- 411: Befestigungselement
- 420: Seitenfläche
- 422: Befestigungselement
- 430: Seitenfläche
- 440: Seitenfläche
- 442: Befestigungselement
- 450: untere Oberfläche
- 451: Befestigungselement
- 1000: Verfahren
- 1010: Verfahrensschritt
- 1020: Verfahrensschritt
- 1030: Verfahrensschritt
- 1040: Verfahrensschritt
- 1050: Verfahrensschritt
- 1060: Verfahrensschritt
- 1300: Verfahrensschritt
- 1310: Verfahrensschritt
- 1320: Verfahrensschritt
- 1330: Verfahrensschritt
- 1340: Verfahrensschritt
- 1350: Verfahrensschritt
- 1360: Verfahrensschritt
- 1370: Verfahrensschritt
- 1380: Verfahrensschritt

## Patentansprüche

1. Vorrichtung (10) zur gemeinsamen Erfassung einer Farbe und eines Abstands eines Gegenstands, umfassend:
- eine Sendeeinheit (100), umfassend:
- ein Lichtelement, das ausgebildet ist, Licht in einem vordefinierten Wellenlängenbereich zu emittieren; und
- eine Sendeoptik (130), die ausgebildet ist, das emittierte Licht auf einen Gegenstand zu richten;
- eine Empfangseinheit (200), umfassend
- ein erstes Empfangselement (210);
- ein zweites Empfangselement (220), das von dem ersten Empfangselement (210) beabstandet angeordnet ist, und
- eine Empfangsoptik (230);
- wobei die Empfangsoptik ausgebildet ist, von dem Gegenstand remittiertes Licht zu empfangen und auf das erste Empfangselement (210) und das zweite Empfangselement (220) zu richten; und
- eine Auswerteeinheit, die ausgebildet ist, von dem ersten Empfangselement (210) empfangenes Licht auszuwerten und einen Abstand des Gegenstands zu ermitteln und von dem zweiten Empfangselement (220) empfangenes Licht auszuwerten und eine Farbe des Gegenstands zu ermitteln,
wobei das Lichtelement eine erste Lichtquelle (111), eine zweite Lichtquelle (112) und eine dritte Lichtquelle (113) aufweist, die voneinander beabstandet sind und die ausgebildet sind, Licht in drei verschiedenen vordefinierten Wellenlängenbereichen zu emittieren,
wobei die Sendeeinheit (100) weiter eine Überlagerungsoptik (115) aufweist, die ausgebildet ist, das von den drei Lichtquellen (111, 112, 113) emittierte Licht zu überlagern und auf eine gemeinsame Strahlachse zu richten, **dadurch gekennzeichnet, dass** die erste, zweite und dritte Lichtquelle (111, 112, 113) nacheinander aktiviert werden, sodass sich ein Emissionsmuster aus den drei Wellenlängenbereichen ergibt,
wobei das zweite Empfangselement (220) derart ausgebildet ist, dass es die Intensität des remittierten Lichts ermittelt und die Auswerteeinheit auf Basis dieser Intensität unter Berücksichtigung des Emissionsmusters die Farbe des Gegenstands ermittelt.

2. Vorrichtung nach Anspruch 1,
wobei die Überlagerungsoptik einen Reflektor umfasst, der eine Vielzahl von reflektierenden Flächen aufweist, die angeordnet und ausgebildet sind, das von den drei Lichtquellen emittierte Licht zu überlagern und auf eine gemeinsame Strahlachse zu richten.

3. Vorrichtung nach Anspruch 1,
wobei die Überlagerungsoptik einen Spiegel und zwei dichroitische Spiegel, die angeordnet und ausgebildet sind, das von den drei Lichtquellen emittierte Licht zu überlagern und auf eine gemeinsame Strahlachse zu richten.

4. Vorrichtung nach Anspruch 1,
wobei die Überlagerungsoptik ein erstes Prisma, ein zweites Prisma, ein drittes Prisma und ein viertes Prisma umfasst, die derart aneinander angeordnet sind, dass sie gemeinsam eine Quaderform aufweisen, wobei Kontaktflächen zwischen den Prismen dichroitisch beschichtet und angeordnet und ausgebildet sind, das von den drei Lichtquellen emittierte Licht zu überlagern und auf eine gemeinsame Strahlachse zu richten.

5. Vorrichtung nach einem der vorstehenden Ansprüche,
wobei die Auswerteeinheit ausgebildet ist, basierend auf dem ermittelten Abstand des Gegenstands die ermittelte Farbe zu korrigieren.

6. Verfahren (1000) zur gemeinsamen Erfassung einer Farbe und eines Abstands eines Gegenstands, umfassend:
- Emittieren (1010) von Licht mittels einer ersten Lichtquelle (111), einer zweiten Lichtquelle (112) und einer dritten Lichtquelle (113) in drei vordefinierten Wellenlängenbereichen, wobei die erste, zweite und dritte Lichtquelle (111, 112, 113) nacheinander aktiviert werden, sodass sich ein Emissionsmuster aus den drei Wellenlängenbereichen ergibt;
- Überlagern des von den drei Lichtquellen (111, 112, 113) emittierten Lichts und Richten (1020) des emittierten Lichts auf eine Strahlachse auf einen Gegenstand mittels einer Überlagerungsoptik;
- Empfangen (1030) von von dem Gegenstand remittiertem Licht
- Richten (1040) des remittierten Lichts auf ein erstes Empfangselement und ein zweites Empfangselement;
- Auswerten (1050) des von dem ersten Empfangselement empfangenen Lichts um einen Abstand des Gegenstands zu ermitteln; und
- Auswerten (1060) des von dem zweiten Empfangselement empfangenen Lichts um eine Farbe des Gegenstands zu ermitteln **dadurch gekennzeichnet, dass** das Auswerten (1060) des von dem zweiten Empfangselement empfangenen Lichts ein Ermitteln der Intensität des remittierten Lichts umfasst und die Farbe auf Basis dieser Intensität unter Berücksichtigung des Emissionsmusters ermittelt wird.

## Claims

1. An apparatus (10) for jointly detecting a color and a distance of an object, said apparatus (10) comprising:
- a transmission unit (100), comprising:
- a light element which is configured to emit light in a predefined wavelength range; and
- a transmission optics (130) which is configured to direct the emitted light to an object;
- a reception unit (200), comprising
- a first reception element (210);
- a second reception element (220) which is arranged spaced apart from the first reception element (210); and
- a reception optics (230),
- wherein the reception optics is configured to receive light remitted by the object and to direct it to the first reception element (210) and the second reception element (220); and
- an evaluation unit which is configured to evaluate light received by the first reception element (210) and to determine a distance of the object and to evaluate light received by the second reception element (220) and to determine a color of the object,
wherein the light element has a first light source (111), a second light source (112) and a third light source (113) which are spaced apart from one another and which are configured to emit light in three different predefined wavelength ranges,
wherein the transmission unit (100) further has a superposition optics (115) which is configured to superpose the light emitted by the three light sources (111, 112, 113) and to direct it to a common beam axis,
**characterized in that** the first, second and third light source (111, 112, 113) are successively activated so that an emission pattern results from the three wavelength ranges,
wherein the second reception element (220) is configured such that it determines the intensity of the remitted light and the evaluation unit determines the color of the object on the basis of this intensity, considering the emission pattern.

2. An apparatus according to claim 1,
wherein the superposition optics comprises a reflector which has a plurality of reflective surfaces which are arranged and configured to superpose the light emitted by the three light sources and to direct it to a common beam axis.

3. An apparatus according to claim 1,
wherein the superposition optics has one mirror and two dichroic mirrors which are arranged and configured to superpose the light emitted by the three light sources and to direct it to a common beam axis.

4. An apparatus according to claim 1,
wherein the superposition optics comprises a first prism, a second prism, a third prism and a fourth prism which are arranged adjacent to one another such that they together have a cuboid shape, wherein contact surfaces between the prisms are dichroically coated and are arranged and configured to superpose the light emitted by the three light sources and to direct it to a common beam axis.

5. An apparatus according to any one of the preceding claims,
wherein the evaluation unit is configured to correct the determined color based on the determined distance of the object.

6. A method (1000) for jointly detecting a color and a distance of an object, comprising:
- emitting (1010) light by means of a first light source (111), a second light source (112) and a third light source (113) in three different predefined wavelength ranges, wherein the first, second and third light source (111, 112, 113) are successively activated so that an emission pattern results from the three wavelength ranges;
- superposing the light emitted by the three light sources (111, 112, 113) and directing (1020) the emitted light to a beam axis to an object by means of a superposition optics;
- receiving (1030) light remitted by the object;
- directing (1040) the remitted light to a first reception element and a second reception element;
- evaluating (1050) the light received by the first reception element to determine a distance of the object; and
- evaluating (1060) the light received by the second reception element to determine a color of the object,
**characterized in that** the evaluation (1060) of the light received by the second reception element comprises determining the intensity of the remitted light and the color is determined on the basis of this intensity, considering the emission pattern.

## Revendications

1. Dispositif (10) pour la détection commune d'une couleur et d'une distance d'un objet, comprenant :
- une unité d'émission (100), comprenant :
- un élément lumineux conçu pour émettre de la lumière dans une plage de longueurs d'onde prédéfinie ; et
- une optique d'émission (130) conçue pour diriger la lumière émise vers un objet ;
- une unité de réception (200), comprenant :
- un premier élément de réception (210) ;
- un deuxième élément de réception (220) disposé à distance du premier élément de réception (210), et
- une optique de réception (230) ;
- l'optique de réception étant conçue pour recevoir la lumière renvoyée par l'objet et pour la diriger vers le premier élément de réception (210) et vers le deuxième élément de réception (220) ; et
- une unité d'évaluation conçue pour évaluer la lumière reçue par le premier élément de réception (210) et pour déterminer une distance de l'objet et pour évaluer la lumière reçue par le deuxième élément de réception (220) et pour déterminer une couleur de l'objet,
l'élément lumineux comprenant une première source lumineuse (111), une deuxième source lumineuse (112) et une troisième source lumineuse (113) qui sont espacées les unes des autres et qui sont conçues pour émettre de la lumière dans trois plages de longueurs d'onde prédéfinies différentes, l'unité d'émission (100) comprenant en outre une optique de superposition (115) conçue pour superposer la lumière émise par les trois sources lumineuses (111, 112, 113) et pour la diriger vers un axe de faisceau commun,
**caractérisé en ce que**
les première, deuxième et troisième sources lumineuses (111, 112, 113) sont activées successivement, de manière à former un motif d'émission à partir des trois plages de longueurs d'onde,
le deuxième élément de réception (220) étant conçu de manière à déterminer l'intensité de la lumière renvoyée, et l'unité d'évaluation déterminant la couleur de l'objet en se basant sur ladite intensité en prenant en compte le motif d'émission.

2. Dispositif selon la revendication 1,
dans lequel l'optique de superposition comprend un réflecteur présentant une pluralité de surfaces réfléchissantes agencées et conçues pour superposer la lumière émise par les trois sources lumineuses et pour la diriger vers un axe de faisceau commun.

3. Dispositif selon la revendication 1,
dans lequel l'optique de superposition comprend un miroir et deux miroirs dichroïques agencés et conçus pour superposer la lumière émise par les trois sources lumineuses et pour la diriger vers un axe de faisceau commun.

4. Dispositif selon la revendication 1,
dans lequel l'optique de superposition comprend un premier prisme, un deuxième prisme, un troisième prisme et un quatrième prisme qui sont disposés les uns à côté des autres de manière à présenter conjointement une forme parallélépipédique, les surfaces de contact entre les prismes étant revêtues de manière dichroïque et étant agencées et conçues pour superposer la lumière émise par les trois sources lumineuses et pour la diriger vers un axe de faisceau commun.

5. Dispositif selon l'une des revendications précédentes,
dans lequel l'unité d'évaluation est conçue pour corriger la couleur déterminée en se basant sur la distance déterminée de l'objet.

6. Procédé (1000) de détection commune d'une couleur et d'une distance d'un objet, consistant à :
- émettre (1010) de la lumière dans trois plages de longueurs d'onde prédéfinies au moyen d'une première source lumineuse (111), d'une deuxième source lumineuse (112) et d'une troisième source lumineuse (113), les première, deuxième et troisième sources lumineuses (111, 112, 113) étant activées successivement, de manière à former un motif d'émission à partir des trois plages de longueurs d'onde ;
- superposer la lumière émise par les trois sources lumineuses (111, 112, 113), et diriger (1020) la lumière émise sur un axe de faisceau vers un objet au moyen d'une optique de superposition ;
- recevoir (1030) la lumière renvoyée par l'objet ;
- diriger (1040) la lumière renvoyée vers un premier élément de réception et vers un deuxième élément de réception ;
- évaluer (1050) la lumière reçue par le premier élément de réception pour déterminer une distance de l'objet ; et
- évaluer (1060) la lumière reçue par le deuxième élément de réception pour déterminer une couleur de l'objet,
**caractérisé en ce que** l'évaluation (1060) de la lumière reçue par le deuxième élément de réception consiste à déterminer l'intensité de la lumière renvoyée, la couleur étant déterminée sur la base de ladite intensité en prenant en compte le motif d'émission.
